# EUROPÄISCHE PATENTSCHRIFT

(11) **EP 0 492 103 B1**
(45) Veröffentlichungstag und Bekanntmachung des Hinweises auf die Patenterteilung: **19.08.1998**
(21) Anmeldenummer: 91119142.7
(22) Anmeldetag: 11.11.1991
(51) Int. Cl.: B60R 16/02

(54) **Einrichtung zur Spannungsversorgung bei Geräten mit Nachlauf**
Power supply installation for devices with delayed cut-off
Installation pour l'alimentation en courant pour des appareils à mise hors fonctionnement retardé

(30) Priorität: 22.12.1990 DE 4041620
(43) Veröffentlichungstag der Anmeldung: 01.07.1992
(73) Patentinhaber: ROBERT BOSCH GMBH, 70442 Stuttgart (DE)
(72) Erfinder: Werner, Peter, Dipl.-Ing., W-7135 Wiernsheim-Iptingen (DE); Arnold, Herbert, Dipl.-Ing., W-7147 Eberdingen (DE); Ströbele, Hans-Peter, Dipl.-Ing., W-7000 Stuttgart 1 (DE)

(56) Entgegenhaltungen:
- EP-A- 0 225 140
- DE-A- 3 743 962
- US-A- 4 218 717
- US-A- 4 342 946

## Beschreibung

### Stand der Technik

Die Erfindung geht aus von einer Einrichtung zur Spannungsversorgung nach der Gattung des Anspruchs 1.

Ein Kraftfahrzeug weist eine Vielzahl von elektronischen Geräten bzw. Baugruppen auf, die während des Betriebszustandes des Kraftfahrzeugs mit Spannung versorgt werden müssen. Dabei stellen die einzelnen Baugruppen sehr unterschiedliche Anforderungen an die Konstanz bzw. den Wert der benötigten Spannung.

Einige der Geräte bzw. Baugruppen müssen auch nach Abschalten des Motors noch mit Spannung versorgt werden, damit eine erfolgreiche Datenverarbeitung oder Datenabspeicherung in einem Permanentspeicher erfolgen kann. Andere Geräte wie beispielsweise ein Hitzdraht-Luftmassen-Messer werden nach jedem Abstellen des Motors für eine kurze Zeit elektrisch auf erhöhte Temperatur gebracht und dabei von möglichen Verschmutzungen gereinigt. Dazu wird also nach Abstellen des Motors noch für eine gewisse Zeit eine Versorgungsspannung benötigt.

Wieder andere Baugruppen dürfen aus Sicherheitsgründen nach dem Ausschalten des Motors nicht mehr aktiv sein, als Beispiel kann hier die Kraftstoffpumpe angeführt werden, die nach dem Abschalten des Motors keinen Kraftstoff mehr fördern darf.

Die Unterbrechung der Spannungszufuhr für die einzelnen Baugruppen zur richtigen Zeit erfolgt üblicherweise über das Zündschloß oder über Schalter, die von einem Steuergerät angesteuert werden. Damit eine höhere Zuverlässigkeit erhalten werden kann, sollte eine Sicherheitseinrichtung, die das Steuern der Schaltmittel überwacht, vorgesehen werden.

Eine solche Sicherheitseinrichtung zum Steuern von Schaltmitteln in einer Versorgungsleitung von elektrischen Verbrauchern ist in Verbindung mit einem Kraftstoffzumeßsystem bei einer Brennkraftmaschine aus der DE-OS 28 15 780 bekannt. Dabei wird sichergestellt, daß im Falle einer Störung eine Unterbrechung der Spannungszufuhr zur Kraftstoffpumpe schnell und zuverlässig erfolgt, wahrend bei normalen Abschaltvorgängen ein ruhiges Auslaufen der Brennkraftmaschine gewährleistet ist. Erreicht wird dies durch zwei unterschiedliche Zeitintervalle, die abhängig von der Stellung des Zündschalters gebildet werden und zur Festlegung der Ausschaltgeschwindigkeit herangezogen werden.

Im Falle eines ruhigen Auslaufens der Brennkraftmaschine wird über die Steuereinrichtung für kurze Zeit eine zusätzliche Spannung an den Luftmassenmesser gelegt, um diesen freizubrennen und so von Verunreinigungen zu befreien.

Aus der Druckschrift EP-A2 02 25 140 ist eine Einrichtung zur Spannungsversorgung bei Geräten mit Nachlauf in einem Kraftfahrzeug gemäß dem Oberbegriff des Anspruchs 1 bekannt, bei der sichergestellt werden soll, daß eine irrtümliche Öffnung des Anlaßschalters nicht zu unerwünschten Betriebszuständen führt. Dazu wird dem elektronischen Steuersystem, das die Spannuungsversorgung für die Verbraucher übernimmt, die Versorgungsspannung von der Batterie zum einen über den Anlaßschalter und zum anderen mit Hilfe eines weiteren ansteuerbaren Schaltmittels, beispielsweise eines Relais oder eines Transistors zugeführt. Wenn der Anlaßschalter irrtümlich oder absichtlich betätigt wird, wird vom elektronischen Steuersystem mittels einer Logik geprüft, ob die Spannungsversorgung noch für eine gewisse Zeit aufrechterhalten werden soll. Falls dies der Fall ist, werden entsprechende Ansteuersignale erzeugt, die das Relais oder den Transistor so lange in leitendem Zustand halten, bis die Spannungsversorgung endgültig abgeschaltet werden kann. Die bekannte Einrichtung zur Spannungsversorgung bei Geräten mit Nachlauf hat jedoch keine getrennte Spannungsversorgung, die eine geregelte Permanentspannung auch nach Beendigung einer Nachlaufphase liefern kann.

### Vorteile der Erfindung

Die erfindungsgemäße Einrichtung mit den kennzeichnenden Merkmalen des Hauptanspruchs hat demgegenüber den Vorteil, daß das Steuergerät selbst nach dem Abstellen des Motors nur für eine bestimmte Zeit an der Versorgungsspannung liegt, so daß es innerhalb dieser Nachlaufzeit erforderliche Ansteuerungen durchführen kann, während es sich nach dieser Nachlaufzeit selbst abschaltet.

Durch die Abschaltlogik, die in der Einrichtung implementiert ist, wird ein Sicherheitskonzept realisiert, das einerseits ein rechtzeitiges und sicheres Abschalten des Steuergeräts nach Erledigung der geforderten Nachlaufaufgaben sicherstellt und andererseits verhindert, daß ein unbeabsichtigtes Abschalten im Normalbetrieb erfolgt. Ebenso verhindert die Sicherheitsschaltung ein unmotiviertes Einschalten des Steuergerätes.

Weitere Vorteile der Erfindung bestehen darin, daß eine dauernde Versorgung mit Spannung für Baugruppen, die nicht abgeschaltet werden sollen, ermöglicht wird und daß eine Sicherheitsabschaltung beim Erkennen einer Unterspannung während des Nachlaufs durchgeführt wird, dabei kann diese Sicherheitsschaltung so ausgebildet sein, daß sie mit einer Verzögerung eingreift, so daß sie unempfindlich gegenüber Störimpulsen ist. Baugruppen, die aus Sicherheitsaspekten im Nachlauf nicht aktiv sein dürfen, werden von der Nachlauferkennung gesperrt.

Durch die in den Unteransprüchen aufgeführten Maßnahmen sind vorteilhafte Weiterbildungen und Verbesserungen der im Hauptanspruch angegebenen Einrichtung möglich.

### Zeichnung

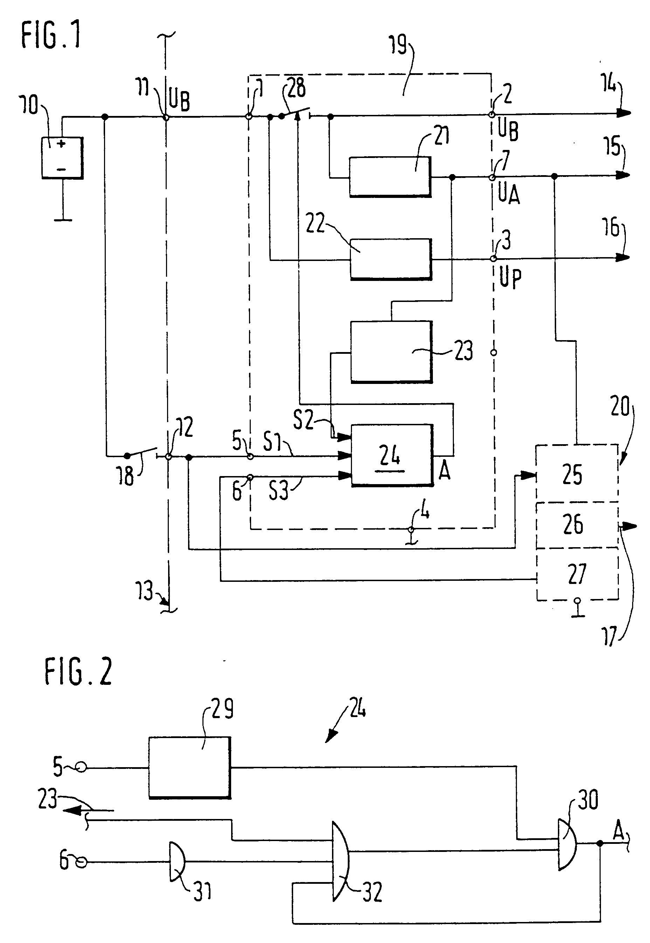

Ein Ausführungsbeispiel der Erfindung ist in der Zeichnung dargestellt und wird in der nachfolgenden Beschreibung erläutert. Es zeigt Figur 1 das Gesamtkonzept der erfindungsgemäßen Einrichtung zur Spannungsversorgung bei Geräten mit Nachlauf und Figur 2 eine Ausgestaltung der Abschaltlogik 24.

### Beschreibung des Ausführungsbeispiels

Bei dem in Figur 1 dargestellten Ausführungsbeispiel der Erfindung ist eine Batterie 10 über zwei Eingänge 11 und 12 mit einem Steuergerät 13 verbindbar, das intern die Leitungen 14, 15, 16 und 17 aufweist und weiterhin mit Masse verbunden ist. Zwischen dem positiven Pol der Batterie 10 und dem Eingang 12 des Steuergeräts 13 liegt der Anlaßschalter 18.

Das Steuergerät 13 weist einen Funktionsblock 19 zur Spannungsversorgung und einen weiteren Funktionsblock, der als logische Einrichtung 20 beispielsweise Bestandteil des zentralen Mikrocomputers ist, auf; die logische Einrichtung 20 kann auch ein eigenständiger Mikroprozessor oder eine aus Logikbausteinen aufgebaute Schaltungsanordnung sein. Die Spannungsversorgungseinrichtung 19 ist ihrerseits in einen Hauptregler 21, einen Standby-Regler 22, eine Einrichtung zur Sicherheitsabschaltung 23 sowie eine Abschaltlogik 24 unterteilt.

Die logische Einrichtung 20 bzw. der Mikrocomputer enthält eine Einheit zur Erkennung von Normalbetrieb/Nachlauf 25, eine Einrichtung zur Ausgabe eines Sperrsignals für sicherheitskritische Baugruppen 26, die während der Nachlaufzeit gesperrt sein müssen und eine Einheit zur Ausgabe des Nachlaufendesignals 27.

Die Spannungsversorgungseinrichtung 19 ist über einen Eingang 1 und Anschluß 11 des Steuergerätes 13 mit dem Pluspol der Batterie 10 verbunden und über Eingang 5 und Anschluß 12 des Steuergerätes 13 sowohl mit dem Anlaßschalter 18 als auch mit der Einrichtung zur Erkennung von Normalbetrieb/Nachlauf 25. Eingang 6 der Spannungsversorgungseinrichtung 19 ist mit der Einrichtung zur Ausgabe des Nachlaufendesignales verbunden. Die Ausgänge 2,3 und 7 der Spannungsversorgungseinrichtung 19 liefern eine abschaltbare Batteriespannung U_{B}, eine geregelte Permanentspannung Uₚ und eine abschaltbare geregelte Spannung U_{A}, die gegebenenfalls an den Leitungen 14, 15, 16 den verschiedenen Baugruppen innerhalb des Steuergerätes zur Verfügung stehen, so wird beispielsweise der zentrale Mikrocomputer von Leitung 15 versorgt.

Üblicherweise beträgt die abschaltbare Batteriespannung U_{B} 12 Volt und die abschaltbare geregelte Spannung U_{A} ebenso wie die geregelte Permanentspannung Uₚ 5 Volt. Eine Anpassung an andere Spannungserfordernisse wäre gegebenenfalls möglich.

Die Spannungsversorgungseinrichtung 19 enthält weiterhin einen Schalter 28, der von der Abschaltlogik 24 angesteuert wird und zur An- bzw. Ausschaltung der an den Ausgängen 2 und 7 anstehenden Spannungen dient.

In Figur 2 ist die Abschaltlogik 24, die Bestandteil der Spannungsversorgungseinrichtung 19 ist, verdeutlicht. Eingang 5, der mit dem Anlaßschalter 18 verbunden ist, führt auf eine Schwellwertstufe 29, die ihrerseits mit einem ODER-Gatter 30 verbunden ist. Eingang 6 ist über ein NICHT-Gatter 31 mit einem UND-Gatter 32 verbunden, dessen anderer Eingang zur Einrichtung zur Sicherheitsabschaltung 23 führt. Der Ausgang des UND-Gatters 32 ist auf einem zweiten Eingang des ODER-Gatters 30 geführt. Der Ausgang des ODER-Gatters 30 ist mit A bezeichnet, dieser Ausgang steht mit dem Schalter 28 der Spannungsversorgungseinrichtung 19 in Verbindung.

Zwischen dem Ausgang des ODER-Gatters 30 und einem dritten Eingang des UND-Gatters 32 ist eine weitere Verbindung geschaltet, die eine Abschaltverriegelung darstellt. Diese Verriegelung stellt ein zuverlässiges Abschalten unabhängig von den Signalen an den Eingängen 5 und 6 auch bei Unterspannung sicher.

Die Wirkungsweise der in Figur 2 dargestellten Abschaltlogik 24 läßt sich am einfachsten anhand einer Tabelle erklären, die in der Beschreibung näher erläutert wird.

| | Eingang 5 | Sicherheitsschaltung | Eingang 6 | Schaltsignal am Ausgang A |
|---|---|---|---|---|
| | S1 | S2 | S3 | |
| Normalbetr. | 1 | x | x | ein |
| Nachlauf | 0 | 1 | 0 | ein |
| Abschalten | 0 | x | 1 | aus |
| Ausgesch. | 0 | 0 | 0 | aus |
| x = ohne Bedeutung 1 = ein 0 = aus | | | | |

Die Funktionsweise der in Figur 1 dargestellten Einrichtung ist folgendermmßen zu verstehen.

Das Steuergerät 13 wird von der Batterie 10 über den Eingang 11 mit Spannung versorgt. Im Steuergerät 13 selbst ist eine Einrichtung zur Spannungsversorgung 19 enthalten, der über Eingang 1 ständig die Batteriespannung U_{B} zugeführt wird, wobei 19 den Hauptregler 21 und den Standby-Regler 22 aufweist. Bei geschlossenem Schalter 28 wird sowohl dem Hauptregler 21 als auch dem Standby-Regler 22 die Batteriespannung U_{B} zugeführt, ansonsten sind die Eingänge 1 und 2 miteinander verbunden, daher kann an Leitung 14 des Steuergeräts direkt die ungeregelte Batteriespannung U_{B} abgegriffen werden, und über den Hauptregler 21 wird über Leitung 15 eine abschaltbare geregelte Spannung U_{A} bereitgestellt.

Bei geöffnetem Schalter 28 werden die Ausgänge 2 und 7 der Spannungsversorgung 19 bzw. die dazugehörigen Leitungen 14 und 15 des Steuergeräts spannungslos.

Über den Standby-Regler 22 kann unabhängig von der Schalterstellung 28 an Ausgang 3 der Spannungsversorgung 19 bzw. Leitung 16 des Steuergeräts 13 eine Permanentspannung Uₚ abgegriffen werden, die zur Spannungsversorgung von Baugruppen, die ständig versorgt werden sollen, dient.

Angesteuert wird die Schalteinrichtung 28 mit Hilfe der Abschaltlogik 24, die ihrerseits Informationen über die Stellung des Anlaßschalters 18 (Signal S1) zur Erkennung von Normalbetrieb oder Nachlauf sowie Informationen, die von der Einrichtung zur Sicherheitsabschaltung 23 geliefert werden (Signal S2), auswertet. Zusätzlich wird der Abschaltlogik 24 vom Mikrocomputer 20 ein Nachlaufende-Signal (Signal S3) zugeführt.

Aus den drei genannten Signalen wird in der Abschaltlogik 24 ein Ausgangssignal gebildet, das die Schalteinrichtung 28 in die richtige Stellung legt. Verdeutlicht wird die Funktionsweise der Abschaltlogik 24 durch die Tabelle sowie über Figur 2.

In der Einrichtung zur Sicherheitsabschaltung 23 wird die Ausgangsspannung des Hauptreglers 21 mit einem Grenzwert verglichen. Liegt diese Ausgangsspannung über dem Grenzwert, bleibt die Einrichtung zur Sicherheitsabschaltung 23 inaktiv. Fällt diese Ausgangsspannung dagegen unter den Grenzwert, wird die Schaltung aktiv. Im aktiven Fall wird der Abschaltlogik 24 ein logisches Signal 0 zugeführt, im inaktiven Fall ein logisches Signal 1.

Über Eingang 5 wird dem Schwellwertschalter 29 der Abschaltlogik 24 die Information über die Stellung des Anlaßschalters 18 zugeführt. Wenn am batteriefernen Anschlub des Anlaßschalters 18 keine Spannung anliegt bzw. nur eine geringe Spannung, die unterhalb einem Schwellwert liegt, wird in der Abschaltlogik eine logische 0 erzeugt. Liegt dagegen am batteriefernen Anschluß des Anlaflschalters 18 eine Spannung an, die oberhalb eines Grenzwertes liegt, wird in der Abschaltlogik eine logische 1 gebildet, das Fahrzeug ist also im Normalbetrieb. Dabei ist es von Vorteil, wenn die beiden genannten Grenzwerte unterschiedlich sind, insbesondere ist es vorteilhaft, wenn der letzte Grenzwert höher liegt als der erste Grenzwert.

Über Eingang 6 wird der Abschaltlogik 24 vom Mikrocomputer 20 die Information darüber zugeführt, ob der Nachlauf aktiv ist oder ob ein Nachlaufende gegeben ist. Dabei bedeutet ein Signal logisch 0, daß der Nachlauf aktiv ist, das Signal logisch 1 bedeutet Abschalten.

Das an Eingang 6 eingespeiste Nachlaufendesignal wird in der Abschaltlogik 24 in einem NICHT-Gatter 31 invertiert und in einem nachfolgenden UND-Gatter 32 mit dem Signal der Einrichtung zur Sicherheitsabschaltung 23 verknüpft. Dabei entsteht am Ausgang des UND-Gatters 32 nur dann eine logische 1, wenn an beiden Eingängen des UND-Gatters eine 1 anliegt.

Am Ausgang A des nachgeschalteten ODER-Gatters 30 entsteht dann ein positives Ausgangssignal, wenn entweder die vom Anlaßschalter kommende Spannung den Schwellwert des Schwellwertschalters 29 überschreitet oder wenn am Ausgang des UND-Gatters 32 ein positives Signal Logisch 1 anliegt.

Das Ausgangssignal des ODER-Gatters 30 schaltet das Schaltmittel 28, dabei ist das Schaltmittel 28 geschlossen, wenn am Ausgang des ODER-Gatters eine Spannung ansteht, das Schaltmittel 28 wird geöffnet, wenn am Ausgang des ODER-Gatters 30 ein Logisch 0 Signal anliegt.

Mit der vorliegenden Einrichtung kann ein Steuergerät realisiert werden, das eine optimale Spannungsversorgung und gegebenenfalls eine zuverlässige Spannungsunterbrechung für alle im Fahrzeug eingesetzten Bauelemente während des Betriebs, in einer Nachlaufphase und nach Ablauf der Nachlaufphase gewährleistet. Die Dauer der Nachlaufphase soll wählbar und an gegebene Erfordernisse anpaßbar sein.

Durch die Abschaltlogik wird ein Sicherheitskonzept ermöglicht, das ein sicheres Abschalten des Steuergerätes nach der Nachlaufphase von der Spannungsversorgung gewährleistet und Endstufen, die aus Sicherheitsgründen in der Nachlaufphase nicht aktiv sein dürfen, sind im Nachlauf von der Spannungsversorgung abgetrennt. Unbeabsichcigtes Abschalten im Normalbetrieb wird verhindert.

Im einzelnen läßt sich mit der in Figur 1 beschriebenen Einrichtung eine Spannungsversorgung realisieren, bei der im Normalbetrieb eine abschaltbare, ungeregelte Batteriespannung U_{B} bereitgestellt wird, bei der ebenfalls im Normalfall über den Hauptreglr 21 eine abschaltbare, geregelte Spannung U_{A} zur Verfügung gestellt wird und bei der über den Standby-Regler 22 eine Permanentspannung Uₚ zur Dauerversorgung bestimmter Bauelemente bereitgestellt wird.

Zur Versorgung der im Nachlauf aktiven Baugruppen und Endstufen stehen die selben Spannungen U_{A} und U_{B} wie im Normalbetrieb zur Verfügung. Während des Nachlaufs, also nach Abstellen des Fahrzeugs ist das Steuergerät noch eingeschaltet und ermöglicht Freibrennen, Datenverarbeitung, Datenspeicherung im Permanentspeicher und Ansteuerung von bestimmten Einrichtungen. Nach dem Nachlauf wird von der Abschaltlogik 24 die Schalter 28 geöffnet und trennt die im Nachlauf aktiven Baugruppen von der Spannungsversorgung.

Die Spannungsversorgung für Normalbetrieb und Nachlauf einschließlich Abschaltlogik kann in einer einzigen Baugruppe zusammengefaßt werden. Es sind dann keine Schaltrelais erforderlich. Die Abschaltlogik samt Sicherheitsstrategie gewährleistet optimale Funktionssicherheit und Störunempfindlichkeit in störbehafteter Umgebung auch dann, wenn die ansteuernden Quellen aufgrund absinkender Versorgungsspannung nicht mehr spezifiziert sind.

## Patentansprüche

1. Einrichtung zur Spannungsversorgung bei Geräten mit Nachlauf in Kraftfahrzeugen, mit einem steuergerät (13), das einen Funktionsblock (19) zur Spannungsversorgung von Baugruppen des Steuergeräts (13) mit wenigstens einem über ein Schaltmittel (28) zur An- oder Abschaltung einer von einer Batterie (10) gelieferten ersten Spannung (U_{B}) angeschlossenen Hauptregler (21) zur Lieferung einer abschaltbaren, geregelten zweiten Spannung (U_{A}) aufweist, wobei das steuergerät (13) eine Abschaltlogik (24) zur Ansteuerung des Schaltmittels (28) aufweist, die mit einem Anlaßlschalter (18) und mit einer Einrichtung zur Sicherheitsabschaltung (23) in Verbindung steht und von einer logischen Einrichtung (20), vorzugsweise einen Mikrocomputer, angesteuert wird, wobei die logische Einrichtung (20) Einrichtungen zur Erkennung Normalbetrieb/Nachlauf (25), und eine Einheit zur Ausgabe eines Nachlaufendesignals (27) nach Ablauf einer Nachlaufzeit aufweist, dadurch gekennzeichnet, daß der Funktionsblock (19) zur Spannungsversorgung zusätzlich einen Standby-Regler (22) umfaßt, der direkt mit der Batterie (10) in Verbindung steht und über den unabhängig vom Zustand des Schaltmittels (28) eine geregelte Permanentspannung (U_{P}) als dritte Spannung zur Versorgung von Baugruppen, die ständig mit Strom versorgt werden sollen, abgreifbar ist und daß die logische Einrichtung (20) eine Einheit (26) zur Ausgabe eines Sperrsignals für sicherheitskritische Baugruppen, das während der Nachlaufzeit bestimmte Baugruppen spannungslos hält, umfaßt.

2. Einrichtung nach Anspruch 1, dadurch gekennzeichnet, daß die Abschaltlogik (24) einen Schwellwertschalter (29) aufweist, über den sie mit dem Anlaßschalter (18) in Verbindung steht, daß dem Schwellwertschalter (29) ein Signal S1 zugeführt wird, das vom Zustand des Anlaßschalters abhängig ist, daß am Ausgang des Schwellwertschalters ein logisches Signal erscheint, das einem ODER-Gatter (30) zugeführt wird, an dessen Ausgang das Ansteuersignal A zur Ansteuerung des Schaltmittels (28) entsteht, wobei das ODER-Gatter (30) mit dem Ausgang eines UND-Gatters (32) in Verbindung steht, dessen Eingänge mit der Einrichtung zur Sicherheitsabschaltung (23) und über ein NICHT-Gatter (31) mit der Einheit zur Ausgabe eines Nachlaufendesignals (27) in Verbindung steht.

3. Einrichtung nach einem der Ansprüche 1 oder 2, dadurch gekennzeichnet, daß am Funktionsblock (19)
- am Ausgang 2 die erste Spannung (U_{B}),
- am Ausgang 3 die geregelte Permanentspannung (U_{P}), und
- am Ausgang 7 die geregelte zweite Spannung (U_{A})
zur Verfügung stehen, wobei erste Spannung (U_{B}) und die geregelte zweite Spannung (U_{A}) zur Versorgung der im Nachlauf aktiven Baugruppen dienen.

4. Einrichtung nach Anspruch 3, dadurch gekennzeichnet, daß die Höhe der ersten Spannung (U_{B}) sich von der Höhe der geregelten zweiten Spannung (U_{A}) und der geregelten Permanentspannung (U_{P}) unterscheidet.

## Claims

1. Power supply devise for units which run on in motor vehicles, having a controller (13) which has a functional block (19) for supplying power to assemblies in the controller (13) having at least one main regulator (21), which is connected via a switching means (28) for connecting or disconnecting a first voltage (U_{B}) supplied by a battery (10), for supplying a regulated second voltage (U_{A}) which can be switched off, the controller (13) having a switch-off logic device (24) for actuating the switching means (28), which switch-off logic device (24) is connected to a starter switch (18) and to a device for safe disconnection (23) and is actuated by a logic device (20), preferably a microcomputer, the logic device (20) having devices for identifying normal operation/run on (25), and having a unit for emitting a run-on end signal (27) after a run-on time has elapsed, characterized in that the functional block (19) for the power supply additionally comprises a standby regulator (22) which is directly connected to the battery (10) and via which, irrespective of the state of the switching means (28), a regulated permanent voltage (U_{P}) can be picked off as a third voltage for supplying assemblies which are intended to be supplied with power continuously, and in that the logic device (20) comprises a unit (26) for emitting an inhibiting signal for safety-critical assemblies, which inhibiting signal keeps specific assemblies de-energized during the run-on time.

2. Device according to Claim 1, characterized in that the switch-off logical device (24) has a threshold switch (29) via which it is connected to the starter switch (18), in that the threshold switch (29) is supplied with a signal S1 which is dependent on the state of the starter switch, in that a logical signal appears at the output of the threshold switch and is supplied to an OR gate (30) at whose output the actuation signal A for actuating the switching means (28) is present, the OR gate (30) being connected to the output of an AND gate (32) whose inputs are connected to the device for safe disconnection (23), and via an invertor gate (31) to the unit for emitting a run-on end signal (27).

3. Device according to one of Claims 1 or 2, characterized in that:
- first voltage (U_{B}) is available at output 2 of the functional block (19),
- the regulated permanent voltage (U_{P}) is available at output 3 of the functional block (19), and
- the regulated second voltage (U_{A}) is available at output 7 of the functional block (19),
the first voltage (U_{B}) and the regulated second voltage (U_{A}) being used to supply the assemblies which are active during the run on.

4. Device according to Claim 3, characterized in that the magnitude of the first voltage (U_{B}) differs from the magnitude of the regulated second voltage (U_{A}) and that of the regulated permanent voltage (U_{P}).

## Revendications

1. Installation pour l'alimentation en tension d'appareils à mise hors fonctionnement retardée dans des véhicules à moteur, avec un appareil de commande (13), qui présente un bloc fonctionnel (19) servant à l'alimentation en tension de sous-ensembles de l'appareil de commande (13) avec au moins un régulateur principal (21) qui est raccordé au moyen d'un organe de branchement (28), servant à brancher ou à débrancher une première tension (U_{B}), délivrée par une batterie (10), et qui sert à délivrer une deuxième tension (U_{A}) régulée, qui peut être débranchée, l'appareil de commande (13) présentant un circuit logique de débranchement (24) qui sert à commander l'organe de branchement (28) et qui est en liaison avec un interrupteur de démarrage (18) et avec un système de débranchement de sécurité (23) et qui est commandé par un dispositif logique (20), de préférence un micro-ordinateur, le dispositif logique (20) présentant des dispositifs servant à identifier un fonctionnement normal ou une mise hors fonctionnement retardée (25) et une unité servant à délivrer un signal de fin de mise hors fonctionnement retardée (27) après l'écoulement d'un certain temps de mise hors circuit retardée,
caractérisée en ce que
- le bloc fonctionnel (19), qui sert à l'alimentation en tension, comprend en plus un régulateur en réserve (22) qui est directement en liaison avec la batterie (10) et au moyen duquel on peut prélever, indépendamment de l'état de l'organe de branchement (28), une tension permanente régulée (U_{P}) en tant que troisième tension d'alimentation de sous-ensembles qui doivent être alimentés en permanence en tension et
- le dispositif logique (20) comprend une unité (26) qui sert à délivrer un signal de blocage pour des sous-ensembles critiques quant à la sécurité, signal de blocage qui maintient sans tension des sous-ensembles déterminés pendant le temps de la mise hors fonctionnement retardée.

2. Installation selon la revendication 1,
caractérisée en ce que
- le circuit logique de débranchement (24) présente un interrupteur à valeur de seuil (29), au moyen duquel il est en liaison avec l'interrupteur de démarrage (18),
- on amène à l'interrupteur à valeur de seuil (29) un signal S1 qui est fonction de l'état de l'interrupteur de démarrage,
- à la sortie de l'interrupteur à valeur de seuil il apparaît un signal logique que l'on amène à une grille OU (30), à la sortie de laquelle se forme le signal de commande A qui sert à commander l'organe de branchement (28), la grille OU (30) étant en liaison avec la sortie d'une grille ET (32) dont les entrées sont en liaison avec le système de débranchement de sécurité (23) et au moyen d'une grille NON (31) avec l'unité qui sert à délivrer un signal de fin de mise hors service retardée (27).

3. Installation selon l'une des revendications 1 ou 2,
caractérisée en ce que
sur le bloc fonctionnel (19) on dispose
- à la sortie 2 de la première tension (U_{B}),
- à la sortie 3 de la tension permanente régulée (U_{P}), et
- à la sortie 7 de la deuxième tension régulée (U_{A}),
la première tension (U_{B}) et la deuxième tension régulée (U_{A}) servant à alimenter les sous-ensembles actifs dans la mise hors fonctionnement retardée.

4. Installation selon la revendication 3,
caractérisée en ce que
la valeur de la première tension (U_{B}) se différencie de la valeur de la deuxième tension régulée (U_{A}) et de la tension permanente régulée (U_{P}).
